# EUROPÄISCHE PATENTANMELDUNG

(11) **EP 1 985 351 A1**
(43) Veröffentlichungstag der Anmeldung: **29.10.2008**
(21) Anmeldenummer: 08007628.4
(22) Anmeldetag: 18.04.2008
(51) Int. Cl.: B01D 46/00, B01D 46/46, B01D 35/143, B01D 29/07

(54) **Filtereinrichtung mit Funkerkennungssystem**

(30) Priorität: 19.04.2007 DE 102007018455
(71) Anmelder: helsa-automotive GmbH & Co. KG, 95482 Gefrees (DE)
(72) Erfinder: Trnetschek, Steffan, 95482 Gefrees (DE); Schön, Mirco, 95197 Schauenstein (DE); Seitz, Marcus Dr., 95473 Creussen (DE); Bauer, Bernd, 96187 Stadelhofen (DE)
(74) Vertreter: LOUIS, PÖHLAU, LOHRENTZ

(57) **Zusammenfassung**

Beschrieben wird eine Filtereinrichtung zum Einsatz in einem Kraftfahrzeug als Luftfiltereinrichtung in einer Klimaanordnung oder als Motorfiltereinrichtung. Die Filtereinrichtung weist eine Filtereinheit 2 mit einem Filtergehäuse 21 und einen Filtereinsatz 22 auf, der aus einem Filterrahmen 23 und einem Filterelement 24 besteht. Das Filterelement 24 ist mit einem Transponder 3 ausgestattet und ein Lesegerät 4 zum Auslesen des Transponders 3 ist in dem Filtergehäuse 21 angeordnet, um eine Überprüfung und Identifizierung des Filtereinsatzes im eingebauten Zustand zu ermöglichen. Daten, die auf dem Transponder 3 gespeichert sind und mit dem Lesegerät 4 ausgelesen werden können, sind kryptographisch verschlüsselt.

## Beschreibung

Die Erfindung betrifft eine Filtereinrichtung, vorzugsweise zum Einsatz in einem Kraftfahrzeug als Luftfiltereinrichtung in einer Klimaanordnung oder als Motorfiltereinrichtung, mit einer Filtereinheit mit einem Filtergehäuse und einem einen Filterrahmen und ein Filterelement aufweisenden Filtereinsatz.

Aus der DE 101 38 352 A1 ist eine Filtereinrichtung für die Filtration eines Luftstroms bekannt. Hierbei kann es sich um die Filtration eines Luftstroms handeln, der dem Fahrgastraum eines Kraftfahrzeuges zugeführt wird. Die Filtereinrichtung besteht aus einem Luftfilter, der in ein Filtergehäuse eingesetzt wird. Der Luftfilter ist als ein mit einem Filterrahmen umgebenes Filterelement ausgebildet, welches als Faltenfilterpack ausgeführt ist. Der Luftfilter weist eine vorbestimmte Anströmseite und eine vorbestimmte Abströmseite auf. Um sicherzustellen, dass der Luftfilter in der vorbestimmten Orientierung in dem Filtergehäuse aufgenommen ist, ist vorgesehen, dass der Filterrahmen mindestens ein Rahmenelement aufweist, das mit dem Filtergehäuse speziell derart zusammenwirkt, dass eine zwangsweise Sichtanzeige erzeugt wird, wenn der Filter nicht ordnungemäß eingesetzt ist. In einem solchen Fall steht nämlich das Rahmenelement aus dem Filtergehäuse nach oben vor. Bei einer ordnungsgemäßen Anordnung des Filters im Gehäuse steht das Rahmenelement nicht vor. Durch die so erhaltene Sichtanzeige wird allerdings nicht angezeigt, ob der Filter noch funktionsfähig bzw. verbraucht ist und daher ausgewechselt werden sollte. Um den technischen Zustand des Filters zu prüfen und eine Identifikationsüberprüfung durchzuführen, muss der Filtereinsatz jeweils aus dem Filtergehäuse herausgenommen werden.

Die Kennzeichnung von Filtereinsätzen mit Rahmenelementen aus Kunststoffen, die im Spritzgußverfahren hergestellt werden, erfolgt in der Praxis heute durch Einbringen von Prägungen im Spritzgußwerkzeug. Dies verursacht im Falle von Modifikationen einen hohen Änderungsaufwand-/kosten, da das Spritzgußwerkzeug an sich oder Wechseleinsätze, auf denen die Kennzeichnung eingebracht ist, modifiziert werden müssen.

Weiterhin werden zur Kennzeichnung häufig Tintenstrahldruck, insbesondere bei textilen Rahmenelementen, oder Laserbeschriftung eingesetzt. Gängige Merkmale, mit denen Filtereinsätze gekennzeichnet werden sind: Herstellerlogos, Teilenummern, Materialcodes, Fertigungsdatum und -zeit, Konstruktionsstand, Filtertyp. Um eine maschinelle Erfassung einzelner oder mehrerer Merkmale zu ermöglichen werden teilweise Barcodes verwendet.
Nachteile dieser bekannten Kennzeichnungsverfahren sind :
Eine umfangreiche Kennzeichung (Vielzahl an Merkmalen) benötigt einen hohen, oft nicht zur Verfügung stehenden Platzbedarf.
Lesbarkeit insbesondere bei Barcodebedruckung auf textilen Rahmenelementen (Vliesen) eingeschränkt.
Tintelstrahldruck kann über Lebensdauer durch Umwelteinflüsse verwittern.
Im Falle der Verarbeitung von Barcodes muß direkter Sichtkontakt zum Scanner vorhanden sein.
Es ist kein Verschlüsseln von Informationen möglich.

Der Erfindung liegt die Aufgabe zu Grunde, eine Filtereinrichtung zuschaffen, die eine schnelle und einfache Überprüfung des Filtereinsatzes im verbauten Zustand ermöglicht.

Diese Aufgabe der Erfindung wird mit der Filtereinrichtung gemäß dem Patentanspruch 1 und mit der Verwendung einer Funkerkennung gemäß der Patentansprüche 14 und 15 gelöst.

Mit der Lösung gemäß Patentanspruch 1 ist eine Filtereinrichtung vorgesehen, vorzugsweise zum Einsatz in einem Kraftfahrzeug als Luftfiltereinrichtung in einer Klimaanordnung oder als Motorfiltereinrichtung, mit einer Filtereinheit mit einem Filtergehäuse und einem einen Filterrahmen und ein Filterelement aufweisenden Filtereinsatz. Dabei ist vorgesehen, dass ein Transponder im Bereich der Filtereinheit angeordnet ist, und dass ein Lesegerät zum Auslesen des Transponders in der Filtereinheit oder außerhalb der Filtereinheit angeordnet ist. Bei der erfindungsgemäßen Filtereinrichtung weist der Transponder einen Speicher mit Daten auf. Die Daten des Speichers sind kryptographisch verschlüsselt.

Damit wird eine Filtereinrichtung mit Funkerkennung geschaffen. Dadurch, dass der Transponder im Bereich der Filtereinrichtung angeordnet ist, kann der Zustand der Filtereinrichtung jeder Zeit bestimmt bzw. überprüft werden ohne dass ein unmittelbarer Zugang zur der Filtereinrichtung existieren muss. Durch die Anordnung des Transponders im Bereich der Filtereinrichtung kann die Filtereinrichtung über die Funkerkennung erfasst werden. Das Lesegerät ist zum Auslesen des Transponders ausgebildet. Dadurch ist es möglich, den Zustand des Filtereinsatzes im verbauten Zustand zu ermitteln. Mit der Funkerkennung wird ein schnelles Auslesen des Transponders mit dem Lesegerät ermöglicht. Dadurch, dass das Lesegerät in der Filtereinheit oder außerhalb der Filtereinheit angeordnet ist, kann die Einbauorientierung des Filtereinsatzes in der Filtereinrichtung bestimmt werden, d.h. es kann bestimmt werden, ob der Filtereinsatz ordnungsgemäß oder nicht ordnungsgemäß in der Filtereinheit angeordnet ist. Ferner wird ein unbefugtes Auslesen der Daten oder eine Manipulation der Daten des Transponders dadurch verhindert, dass die Daten des Speichers kryptographisch verschlüsselt sind. Weiterhin kann durch verschlüsselte Daten vermieden werden, dass gefälschte Transponder unerkannt bleiben.

Bei einer erfindungsgemäßen Filtereinrichtung kann vorgesehen sein, dass die kryptographisch verschlüsselten Daten des Speichers mit einem Passwortsystem und/oder einem Hash-Lock-Verfahren und/oder einem Challenge-Response-Verfahren vor unbefugtem Zugriff geschützt sind

Zum Schutz der Daten ist der Einsatz von Passwortsystemen denkbar, die nur geringe Anforderungen an den Transponder stellen. Eine höhere Sicherheit gewährleisten das sogenannte Hash-Lock-Verfahren oder das Challenge-Response-Verfahren.

Bei einer erfindungsgemäßen Filtereinrichtung kann vorgesehen sein, dass die kryptographisch verschlüsselten Daten des Speichers mit einem Schlüssel verschlüsselt werden, wobei der Schlüssel ein oder mehrere, vorzugsweise geheime Passwörter aufweisen kann und dass die ein oder mehreren, vorzugsweise geheimen Passwörter nicht veränderbar sein können.
Als kryptographische Verschlüsselungsverfahren werden vorzugsweise ein Twofish-Verschlüsselungsverfahren, ein 3DES-Verschlüsselungsverfahren oder ein RSA-Verschlüsselungsverfahren verwendet. Als einfachstes Verschlüsselungsverfahren kann vorgesehen sein, dass ein Format zur Speicherung der auf dem Transponder gespeicherten Daten geheim gehalten wird. Vorteilhaft wird somit die missbräuchliche Verwendung der auf dem Transponder gespeicherten Daten verhindert. Das Auslesen des Transponders ist nur mit dem Wissen der Verschlüsselungsmethode und dem zugehörigen Schlüssel möglich. Ein Teil des Schlüssels kann z. B. eine Identifikationsnummer des Lesegeräts sein. Somit kann zusätzlich sichergestellt werden, dass das Auslesen des Transponders nur mit einem bestimmten Lesegerät erfolgen kann. Prinzipiell kann ein beliebiges Lesegerät zum Auslesen des Transponders verwendet werden. Vorzugsweise weist das Lesegerät Eingabemöglichkeiten auf, sodass der vollständige Schlüssel, oder auch nur Teile des Schlüssels, wie etwa ein oder mehrere Passwörter, eingegeben werden können. Ferner kann es auch vorteilhaft sein, wenn der Schlüssel nicht veränderbar ist oder teilweise veränderbar ist. Hierzu kann vorgesehen sein, dass z. B. eine Identifikationsnummer des Lesegeräts einen unveränderbaren Teil des Schlüssels zur Verschlüsselung darstellt und der Transponder nur mit dem Lesegerät mit dieser Identifikationsnummer ausgelesen werden kann.

Der Speicher des Transponders weist eine Speicherkapazität, vorzugsweise von 1 Bit bis 1 Megabyte, auf. Typischerweise werden Speicherkapazitäten von 16 Byte bis 64 Kilobyte verwendet.

Die Daten des Speichers können vorzugsweise ein Element oder mehrere Elemente der folgenden Gruppe umfassen: eine laufende Nummer der Filtereinheit und/oder des Filtereinsatzes , einen Typ der Filtereinheit, einen Hersteller der Filtereinheit, eine Länderkennung, Leistungsdaten und/oder technische Daten der Filtereinheit, eine Einbauorientierung des Filtereinsatzes in dem Filtergehäuse, ein Produktionsdatum der Filtereinheit, ein Produktionsdatum des Filtereinsatzes, ein Einbaudatum der Filtereinheit, und/oder ein Einbaudatum des Filtereinsatzes.

Der Speicher des Transponders kann ein wiederbeschreibbarer Speicher sein, dies ermöglicht ein Aktualisieren der Daten des Transponders, insbesondere der technischen Kenndaten und/oder Serviceintervallzeiten für die Wartung der Filtereinheit. Der wiederbeschreibbare Speicher des Transponders kann somit auch mit speziellen bzw. individuellen Daten beschrieben werden. Der wiederbeschreibbare Speicher des Transponders ist vorzugsweise als EEPROM (EEPROM = electric erasable programmable read-only memory), als FRAM (FRAM = ferromagnetic random access memory) oder als temporärer Zwischenspeicher RAM (RAM = random access memory) ausgebildet.

Die Ausführung des Transponders kann als aktiver, semi-passiver oder passiver Transponder ausgebildet sein. Bei bevorzugten Ausführungen ist ein passiver Transponder vorgesehen. Vorteilhaft bei der Ausführung des Transponders als passiver Transponder ist, dass passive Transponder besonders platzsparend sein können, denn auf eine Energieversorgung des Transponders kann verzichtet werden. Somit können diese Transponder etikettförmig gestaltet werden. Etikettförmige Transponder sind besonders vorteilhaft, weil sich diese Transponder mit bestehenden Filtereinheiten ohne oder mit zumindest geringer Anpassung kombinieren lassen. Der Transponder kann vorzugsweise als ein separates Bauteil ausgebildet sein, sodass mit dem Transponder ein Nachrüsten bzw. ein späteres Ausstatten bestehender Filtereinheiten ermöglicht wird. Etikettförmige Transponder können einfach, wie ein Etikett, auf dem Filtereinsatz, vorzugsweise dem Filterrahmen, aufgeklebt werden. Der Transponder kann als, insbesondere passiver, RFID - Transponder (RFID = radio frequency identification) ausgebildet sein.

Der Transponder ist vorzugsweise an dem Filtereinsatz angeordnet. Insbesondere kann der Transponder auf dem Filterelement und/oder auf dem Filterrahmen angeordnet sein. Der Transponder kann auch zwischen dem Filterelement und dem Filterrahmen angeordnet sein. Vorteilhaft ist, wenn der Transponder in dem Filterelement, insbesondere in dem Material des Filterelements, und/oder in dem Filterrahmen, insbesondere in dem Material des Filterrahmens, angeordnet ist und dabei vor mechanischer Belastung geschützt ist.

Bei der erfindungsgemäßen Filtereinrichtung kann das Lesegerät innerhalb eines Kraftfahrzeugs, vorzugsweise im Bereich der Filtereinheit, angeordnet sein. Das Lesegerät kann dabei außerhalb des Filtergehäuses angeordnet sein. Es kann auch vorgesehen sein, dass das Lesegerät mit dem Filtergehäuse verbunden oder lösbar ausgebildet ist. Bevorzugt ist das Lesegerät jedoch mit dem Filtergehäuse verbunden und/oder lösbar von dem Filtergehäuse ausgebildet.

Damit die ausgelesenen Daten des Speichers des Transponders weiterverarbeitet werden können, ist das Lesegerät vorzugsweise mit einem Display verbindbar ausgebildet und/oder mit einem Display als ein gemeinsames Bauteil ausgebildet. Das Display kann vorzugsweise mit einem Bordcomputer eines Kraftfahrzeuges verbindbar sein und/oder mit einem separaten Computer.

Das Lesegerät ist stationär oder tragbar ausgebildet, wobei vorgesehen sein kann dass das Lesegerät als Handlesegeräte ausgebildet ist.

Bei der erfindungsgemäßen Filtereinrichtung können der Transponder und das Lesegerät eine Betriebsfrequenz aufweisen, vorzugsweise aus einem der folgenden Bereiche: der Niederfrequenz (LF = low frequency) von 30 kHz bis 300 kHz, der Hochfrequenz (RF = radio frequency) von 3 MHz bis 30 MHz, der Ultrahochfrequenz von 300 MHz bis 3 GHz (UHF = ultra high frequency), oder der Mikrowellenfrequenz mit mehr als 3 GHz. Die bei RFID-System verwendeten Frequenzen können in folgende Bereiche unterteilt werden: 9-135 kHz; 6,78 MHz; 13,56 MHz; 27,125 MHz; 433,92 MHz; 865-868 MHz; 915 MHz; 2,45 GHz; 5,8 GHz; 24,125 GHz. Der Transponder und das Lesegerät können eine Sendeleistung von 0,001 W bis 10 W, bevorzugt jedoch eine geringe Sendleistung von 0,1 W aufweisen. Die maximale Sendeleistung wird üblicherweise durch nationale Regulierungsvorschriften geregelt, z.B. gilt nach CEPT und US-Vorschriften (FCC) bei 13,56 MHz eine Begrenzung der elektromagnetischen Feldstärke von 15848 µV/m.

Bei einer erfindungsgemäßen Filtereinrichtung sind der Transponder und das Lesegerät vorzugsweise auf unterschiedlichen Bauteilen angeordnet. Z.B. ist der Transponder auf dem Filtereinsatz und das Lesegerät auf dem Filtergehäuse oder einem anderen Bauteil des Kraftfahrzeuges angeordnet. Das Lesegerät kann auch als separates tragbares Lesegerät ausgebildet sein.

Der Transponder und das Lesegerät können eine Reichweite von 1 mm bis 15 m aufweisen. Besonders vorteilhaft ist jedoch eine bevorzugte Reichweite von 1 cm bis 5 cm. Es kann vorgesehen sein, dass ein Auslesen des Transponders durch das Lesegerät nur dann ermöglicht wird, wenn der Filtereinsatz mit verbundenem Transponder entsprechend zu dem Lesegerät zum Auslesen des Transponders angeordnet ist. Bevorzugt ist dabei vorgesehen, dass ein Auslesen des Transponders nicht möglich ist, wenn der Filtereinsatz mit verbundenem Transponder nicht entsprechend zu dem Lesegerät zum Auslesen des Transponders angeordnet ist. Eine derartige Anordnung ist besonders vorteilhaft, denn es wird ermöglicht die Orientierung des Filtereinsatzes innerhalb des Filtergehäuses mittels des Lesegerätes zu bestimmen. Der Transponder und das Lesegerät weisen hierzu eine kurze Reichweite von vorzugsweise 1 cm bis 5 cm auf. Die Reichweite lässt sich vorzugsweise durch die Sendeleistung beliebig festlegen. Die ordnungsgemäße Orientierung des Filtereinsatzes ist besonders erforderlich, wenn die Filtereinrichtung zur Verwendung in Linkslenkerkraftfahrzeugen und/oder in Rechtslenkerkraftfahrzeugen vorgesehen ist. Vorteilhaft wirkt sich eine kurze Reichweite auch auf die Sicherheit aus, denn ein Auslesen bzw. ein Beschreiben des Speichers des Transponders ist nur möglich, wenn Transponder und Lesegerät innerhalb ihrer Reichweite angeordnet sind.

Vorzugsweise ist die Filtereinrichtung für Kraftfahrzeuge vorgesehen, wobei die Filtereinheit in einem Kraftfahrzeug angeordnet ist. Die Filtereinheit in einem Kraftfahrzeug kann als Filtereinheit einer Klimaeinrichtung, als Kabinenluftfiltereinrichtung, als Kraftstofffiltereinrichtung, als Filtereinheit für eine Brennstoffzelle, als Motorfiltereinrichtung, als Feinstaubfiltereinrichtung, vorzugsweise einer Dieselrußfiltereinrichtung, als Filtereinheit einer Tankbelüftung oder als Ölfiltereinrichtung ausgebildet sein.

Bei erfindungsgemäßen Filtereinrichtungen kann der Filtereinsatz als Ringfilter / Trommelfilter, als extrudierter Formkörperfilter, vorzugsweise mit wabenförmiger Struktur, als Faltenfilter, als spritzgegossener Formkörperfilter, als Plattenfilter und/oder als Filtermatte ausgebildet sein. Hierbei kann das Filterelement, insbesondere bei der Luftfiltereinrichtung in einer Klimaeinrichtung eines Kraftfahrzeuges, als Partikelfilter, als Kombifilter, als Geruchsfilter - vorzugsweise Aktivkohlefilter- ausgebildet sein.

Bei erfindungsgemäßen Filtereinrichtungen kann der Filterrahmen aus Papier, Textilien, Kunststoff, Vliesstoff und/oder Metall bestehen. Das Filterelement kann dabei auch aus Papier, Textilien, Kunststoff und/oder Vliesstoff bestehen. Bevorzugt besteht das Filterelement und der Filterrahmen aus dem selben Material. Vorzugsweise können das Filterelement und der Filterrahmen einstückig ausgebildet sein.

Bei erfindungsgemäßen Filtereinrichtungen kann vorgesehen sein, dass der Filtereinsatz, vorzugsweise der Filterrahmen, mehrere Bauteile aufweist. Es kann aber auch vorgesehen sein, dass der Filtereinsatz ein einziges Bauteil aufweist, wobei das Bauteil und der Filtereinsatz einstückig und vorzugsweise aus dem selben Material ausgebildet sind.

Bei einer erfindungsgemäßen Filtereinrichtung kann vorgesehen sein, dass die Filtereinheit ein mit dem Filtergehäuse und/oder dem Filtereinsatz verbundenes oder lösbares den Transponder tragendes Bauteil aufweist, wobei das Bauteil eine Dichtung, eine Dichtlasche, eine Auszugslasche, ein, vorzugsweise streifenförmiges, Versteifungselement und/oder einen Deckel für das Filtergehäuse bildet. Vorzugsweise ist der Transponder in einem Deckel des Filtergehäuses angeordnet, sodass der Transponder leicht zugänglich mit einem Handlesegerät ist, falls der Transponder und das Lesegerät eine kurze Reichweite aufweisen. Bevorzugt kann der Transponder auf dem Bauteil oder in dem Bauteil, insbesondere in dem Material des Bauteils angeordnet sein. Der Transponder kann vorzugsweise zwischen dem Filterrahmen und dem Bauteil angeordnet sein.

Bei einer erfindungsgemäßen Filtereinrichtung kann vorgesehen sein, dass die Filtereinrichtung mehrere Transponder aufweist. Das Lesegerät kann derart ausgebildet sein, dass das Lesegerät zum Auslesen mehrerer Transponder verwendet werden kann. Die Filtereinrichtung weist vorzugsweise mehrere Filtereinheiten auf. Bevorzugt kann ein einziges Lesegerät zum Auslesen mehrerer Transponder vorgesehen sein, wenn die Filtereinrichtung mehrere Filtereinheiten aufweist, wobei jeder Filtereinheit mindestens ein Transponder zugeordnet ist. Es können ebenso mehrere Lesegeräte in der Filtereinrichtung vorgesehen sein. Die Transponder können dabei in unterschiedlichen Filtereinheiten angeordnet sein.

Bei der in dem System angewandten Funkerkennung kann vorgesehen sein, dass der Transponder einen Speicher mit Daten aufweist. Vorzugsweise sind die Daten des Speichers verschlüsselt. Bevorzugt weist bei der Verwendung einer Funkerkennung der Transponder einen wiederbeschreibbaren Speicher auf. Der Transponder kann hierbei als RFID - Transponder (RFID = radio frequency identification) ausgebildet sein. Der Transponder kann als aktiver, als semi-passiver Transponder oder als passiver Transponder ausgebildet sein.

Bei der Funkerkennung kann das Lesegerät mit einem Display verbindbar oder mit einem Display als gemeinsames Bauteil ausgebildet sein.

Bei einer besonders bevorzugten Verwendung der Funkerkennung kann der Transponder und/oder das Lesegerät eine Reichweite von 1 mm bis 15 m aufweisen. Typischerweise ist die Entfernung von 1 bis 5 cm. RFID Systeme können anhand der Reichweite in folgende Gruppierungen eingeteilt werden: 0 bis 1 cm: close coupling Systeme; 0 bis 1 m: remote coupling Systeme; > 1 m: long range Systeme.

Im Nachfolgenden wird die Erfindung anhand von Ausführungsbeispielen in Verbindung mit Figuren näher beschrieben. Dabei zeigen:
- Figur 1:: Eine perspektivische Ansicht einer Filtereinrichtung eines ersten Ausführungsbeispiels.
- Figur 2:: Eine perspektivische Ansicht eines Filtereinsatzes eines zweiten Ausführungsbeispiels.
- Figur 3:: Eine perspektivische Ansicht eines Filterelements eines dritten Ausführungsbeispiels.
- Figur 4:: Eine perspektivische Ansicht des Filtereinsatzes des dritten Ausführungsbeispiels.
- Figur 5:: Eine perspektivische Ansicht eines Filtereinsatzes eines vierten Ausführungsbeispiels.
- Figur 6:: Eine perspektivische Ansicht eines Filtereinsatzes eines fünften Ausführungsbeispiels, Filterelement nicht gezeigt.
- Figur 7:: Eine perspektivische Ansicht eines Filtereinsatzes eines sechsten Ausführungsbeispiels, Filterelement nicht gezeigt.
- Figur 8:: Eine perspektivische Ansicht eines siebten Ausführungsbeispiels eines Filtereinsatzes mit einem Handlesegerät.

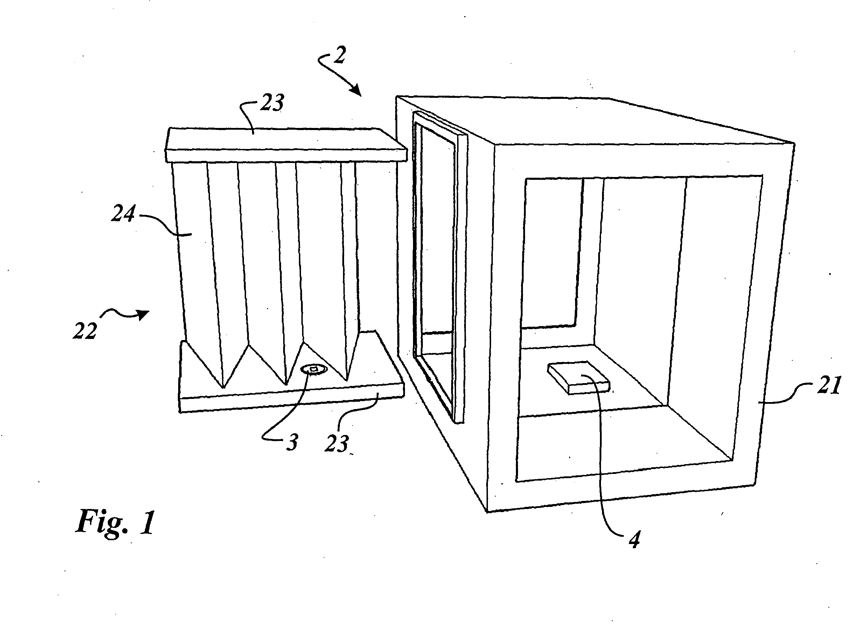

Bei der in Figur 1 gezeigten erfindungsgemäßen Einrichtung handelt es sich um eine Filtereinrichtung für ein Kraftfahrzeug. Diese Filtereinrichtung ist vorzugsweise Bestandteil eines Klimagerätes und zur Kabinenluftfilterung verwendet. Die Filtereinrichtung umfasst eine Filtereinheit 2 mit einem Funkerkennungssystem mit einem Transponder 3 und einem Lesegerät 4.

Die Filtereinheit 2 weist ein Filtergehäuse 21 und einen Filtereinsatz 22 auf. Der Filtereinsatz 22 wird aus einem Filterrahmen 23 und einem Filterelement 24 gebildet. Der Transponder 3 ist auf der Innenseite des Filterrahmens 23 angeordnet. Das Lesegerät 4 zum Auslesen des Transponders 3 ist in dem Filtergehäuse 21 der Filtereinrichtung 2 angeordnet.

Das Filtergehäuse 21 ist bei dem Ausführungsbeispiel in Figur 1 als quaderförmiges Filtergehäuse 21 ausgebildet. Das Filtergehäuse 21 ist vorzugsweise aus Metall oder Kunststoff gebildet. Das Filtergehäuse 21 weist drei an drei Seiten rechteckige Öffnungen auf. Zwei der drei Öffnungen sind entlang der Durchströmungsrichtung der Filtereinheit 2 angeordnet. Die Öffnung quer zur Durchströmungsrichtung der Filtereinheit 2 ist eine Einschuböffnung für den Filtereinsatz 22. Auf dem Filtergehäuseboden ist innenseitig ein Lesegerät 4 zum Auslesen des Transponders 3 angeordnet. Das Lesegerät 4 ist mit dem Filtergehäuse 21 lösbar verbunden. Das Lesegerät 4 ist so angeordnet, dass es im Einbauzustand des Filtereinsatzes 22 mit dem auf dem Filterrahmen 23 angeordneten Transponder 3 fluchtet.

Der Filtereinsatz 22 weist einen Filterrahmen 23 und ein Filterelement 24 auf. Der Filterrahmen 23 besteht aus zwei streifenförmigen Rahmenelementen. Das Filterelement 24 ist plattenförmig und plissiert. Die Rahmenelemente des Filterrahmens 23 verschließen die Faltenöffnungen des Faltenpacks 24 dichtend. Der Filterrahmen 23 wird im Ausführungsbeispiel in Figur 1 durch zwei parallele Seitenstreifen als Rahmenelemente gebildet. Die Filterrahmenelemente 23 und das Filterelement 24 sind miteinander verklebt, vorzugsweise mit einem Hotmelt-Kleber, oder ultraschallverschweißt. Der Filterrahmen 23 besteht aus Papier, Textilien, Kunststoff, Vliesstoff oder Metall. Das Filterelement 24 besteht aus Papier, Textilien, Kunststoff, oder Vliesstoff. Vorzugsweise bestehen jedoch die Filterrahmenelemente 23 und das Filterelement 24 aus dem selben Material und das Filterelement 24 ist als Partikelfilter ausgebildet.

Der Transponder 3 ist bei dem Ausführungsbeispiel in Figur 1 auf der Innenseite nur eines Elementes des Filterrahmens 23 zwischen zwei benachbarten Faltenspitzen angebracht. Der Transponder 3 ist zwischen dem Filterelement 24 und dem Filterrahmen 23 angeordnet. Die geometrische Form des Transponders 3 ist im wesentlichen flach und rund ausgebildet. Der als flache Zylinderscheibe ( so genannte disks) ausgebildete Transponder 3 weist eine Höhe von 0,05 mm bis 1 mm auf und einen Radius von wenigen Millimetern bis zu 10 cm auf. Im Zentrum des Transponders 3 ist ein Chip angeordnet dem kreisförmig umlaufend eine Antenne angeordnet ist.

In einem nicht dargestellten Ausführungsbeispiel mit gegenüber Figur 1 abgewandelter Anordnung des Transponders 3 kann der Transponder 3 auf dem Filterelement 24 oder in dem Filterrahmen 23 ausgebildet sein.

Der Transponder 3 ist vorzugsweise als passiver RFID - Transponder (RFID = radio frequency identification) ausgebildet und umfasst einen Chip und eine Antenne. Der Chip des Transponders 3 weist einen Speicher mit Daten auf. Die Daten des Speichers sind verschlüsselt, sodass ein unbefugtes Auslesen des Speichers nicht erfolgen kann. Der Speicher des Transponders 3 ist ein wiederbeschreibbarer Speicher. Der wiederbeschreibbare Speicher des Transponders 3 ist als EEPROM (EEPROM = electric erasable programmable read-only memory), als FRAM (FRAM = ferromagnetic random access memory) oder als temporärer Zwischenspeicher RAM (RAM = random access memory) ausgebildet. Die Speicherkapazität des Transponders 3 beträgt 1 Bit bis 1 Megabyte, vorzugsweise 16 Byte bis 64 Kilobyte. Der Speicher des Transponders 3 weist folgende Daten auf: eine laufende Nummer der Filtereinheit 2, einen Typ der Filtereinheit 2, einen Hersteller der Filtereinheit 2, eine Länderkennung, mehrere Leistungsdaten und technische Daten der Filtereinheit 2, eine Einbauorientierung des Filtereinsatzes 22 für den Einbau in das Filtergehäuse 21, ein Produktionsdatum der Filtereinheit 2, ein Produktionsdatum des Filtereinsatzes 22, ein Einbaudatum der Filtereinheit 2, ein Einbaudatum des Filtereinsatzes 22, ein Serviceintervall des Filtereinsatzes 22 etc.

Das Lesegerät 4 ist mit einem in Figur 1 nicht dargestellten Display verbindbar. Das Display kann vorzugsweise das Display eines Bordcomputers des Kraftfahrzeuges sein. Der Inhalt des Speichers des Transponders 3 kann somit mittels des Bordcomputers im Kraftfahrzeug ausgelesen werden. Das Display kann auch das Display eines tragbaren Lesgerätes 4 oder eines tragbaren Servicecomputers sein, welche von Servicemechanikern verwendet werden, um das Kraftfahrzeug bzw. die Filtereinrichtung zu warten.

Der Transponder 3 und das Lesegerät 4 der Filtereinrichtung weisen eine Betriebsfrequenz im Bereich von 30 kHz bis 3 GHz oder über 3GHz auf. Vorzugsweise liegt die Betriebsfrequenz im in den RFID üblichen Bereichen: 9-135 kHz; 6,78 MHz; 13,56 MHz; 27,125 MHz; 433,92 MHz; 865-868 MHz; 915 MHz; 2,45 GHz; 5,8 GHz; 24,125 GHz.. Die Reichweite von Transponder 3 und Lesegerät 4 kann im Bereich von 1 mm bis 15 m liegen und vorzugsweise ca. 1 bis 5 cm betragen. Eine kurze Reichweite ist vorteilhaft, wenn ein falschorientierter verbauter Filtereinsatz 22 im Filtergehäuse 21 dadurch erkannt werden soll, dass zwischen Transponder 3 und Lesegerät 4 keine Funkverbindung vorliegt. Ebenso kann umgekehrt aufgrund der kurzen Reichweite erkannt werden, ob Transponder 3 und Lesegerät 4 richtig zueinander orientiert verbaut sind und eine Funkverbindung besteht. Somit ist ein Auslesen des Transponders 3 nur dann möglich, wenn der Filtereinsatz 22 mit verbundenem Transponder 3 entsprechend zu dem Lesegerät 4 zum Auslesen des Transponders 3 angeordnet ist. Folglich ist ein Auslesen des Transponders 3 nicht möglich, wenn der Filtereinsatz 22 mit verbundenem Transponder 3 nicht in der Position entsprechend zu dem Lesegerät 4 zum Auslesen des Transponders 3 angeordnet ist.

In einem nicht dargestellten abgewandelten Ausführungsbeispiel kann die Filtereinrichtung mehrere Filtereinheiten 2 aufweisen. Die Filtereinrichtung kann dann mehrere Transponder 3 und ein Lesegerät 4 oder mehrere Lesegeräte 4 aufweisen. Vorzugsweise werden Lesegeräte 4 eingesetzt, die zum Auslesen mehrerer Transponder 3 geeignet sind. Die Lesegeräte 4 können dabei stationär oder tragbar ausgebildet sein.

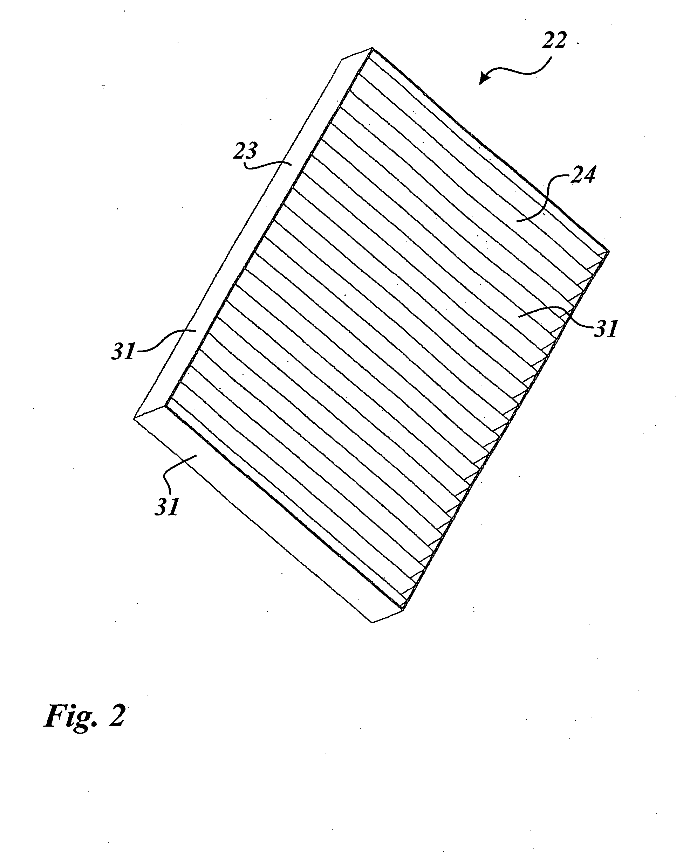

Bei dem in Figur 2 dargestellten Filtereinsatz 22 handelt es sich um einen plattenförmigen Filtereinsatz 22 vorzugsweise zur Verwendung in einer Filtereinrichtung des Aufbaus entsprechend Figur 1. Der plattenförmige Filtereinsatz 22 weist ein Filterelement 24 und einen das Filterelement 24 umlaufenden Filterrahmen 23 auf. Das Filterelement 24 ist plissiert. Hierbei kann das Material des Filterelements 24 aus Papier, Textilien, Kunststoff oder Vliesstoff bestehen. Das Material des Filterrahmens 23 kann aus Papier, Textilien, Kunststoff, Vliesstoff oder Metall bestehen. Es kann aber auch vorgesehen sein, dass das Filterelement 24 und der Filterrahmen 23 das selbe Material aufweisen. Das Filterelement 24 und der Filterrahmen 23 können einstückig ausgebildet sein. Der Anordnungsplatz 31 für einen Transponder 3 kann an den Rahmenelementen des Filterrahmens 23 an dem stirnseitig entlang der Endfalten erstreckendem Rahmenelement oder auch an dem längsseitig entlang zu den Faltenöffnungen erstreckendem Rahmelement angeordnet sein. Der Transponder 3 kann aber auch auf dem Filterelement 24 angeordnet sein.

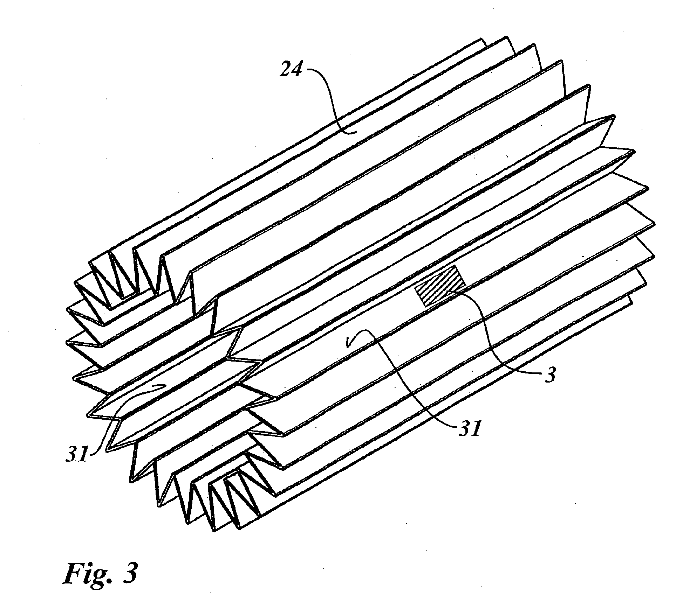

Bei dem in der Figur 3 dargestellten Filterelement 24 handelt es sich um ein Filterelement für einen zylindrischen Ringfilter oder einen Trommelfilter mit plissierter Mantelfläche. Derartige Filterelemente 24 werden, z.B., bei Kraftfahrzeugen in der Kraftstofffiltereinrichtung oder in der Motorfiltereinrichtung eingesetzt. Ein Transponder 3 ist auf der radial nach außengerichteten Oberfläche 31 des Filterelementes 24 angeordnet. Der Transponder 3 kann hierbei auf dem Filterelement 24 aufgeklebt sein. Als alternativer Anordnungsplatz 31 für den Transponder 3 eignet sich auch die radial nach innengerichtete Oberfläche des Filterelements 24. Die geometrische Form des Transponders 3 ist flach quaderförmig. Der Transponder 3 weist eine geringe Höhe von 0,05 mm bis 1 mm und eine rechteckige Grundfläche von 0,5 cm² bis 15 cm² auf. Der Chip des Transponders 3 ist im Zentrum angeordnet mit einer den Chip umlaufenden Antenne.

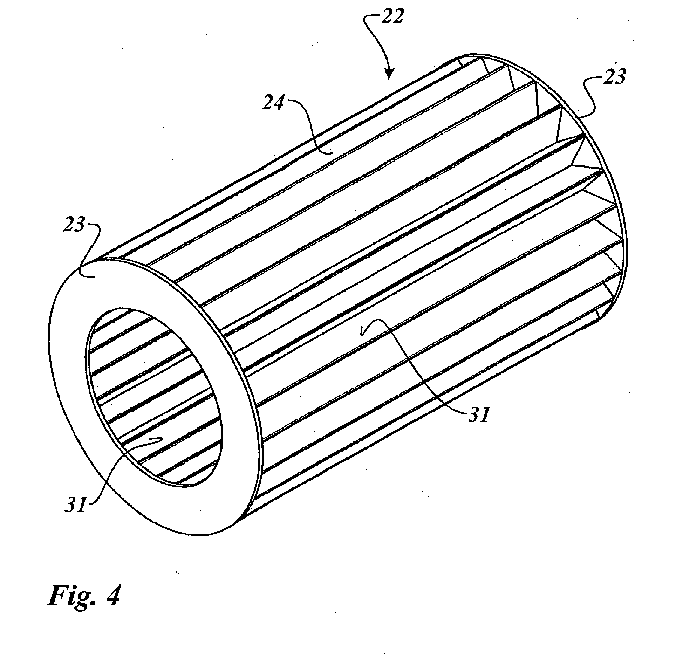

Die Figur 4 zeigt einen vollständigen Filtereinsatz 22 für einen zylindrischen Ringfilter oder einen Trommelfilter. Der Filtereinsatz 22 weist das in Figur 3 beschriebene Filterelement 24 mit plissierter Mantelfläche auf. Die Stirnkanten des plissierten Filterelements 24 werden mit einem zweiteiligen Filterrahmen 23 verschlossen. Der Filterrahmen 23 wird aus zwei flachen ringförmigen Rahmenelementen gebildet. Die flachen ringförmigen Rahmenelemente des Filterrahmens 23 sind mit den Faltenöffnungen des Filterelements 24 verklebt oder ultraschallverschweißt. Diese ringförmigen Rahmenelemente können aus dem selben Material wie das Filterelement 24 gebildet sein. Vorzugsweise ist das Material des Filtereinsatzes 22 Papier oder Vliesstoff.

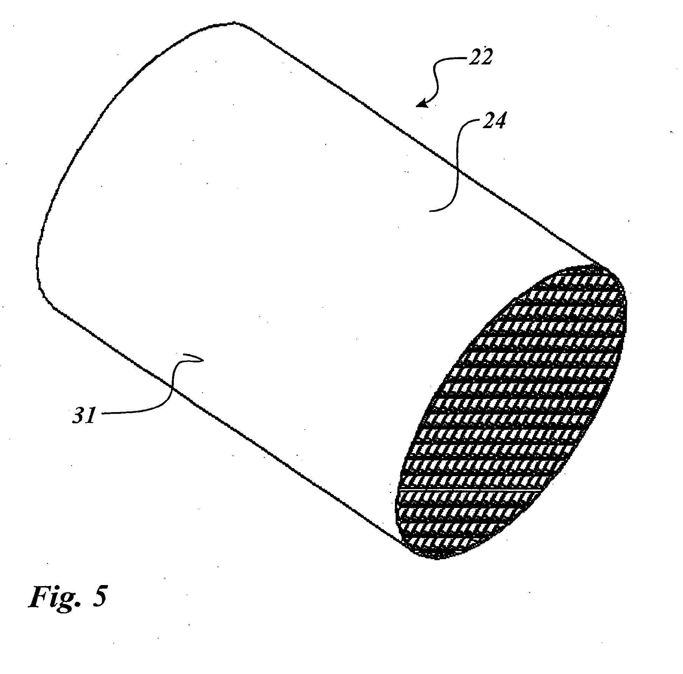

In Figur 5 ist ein zylindrischer Filtereinsatz 22 mit, vorzugsweise sechseckiger, wabenförmiger Struktur gezeigt. Der Filtereinsatz 22 besteht aus extrudierbaren Materialien, wie z.B. Kunststoff, Aktivkohleverbundmaterial, Zeolithverbundmaterial. Der Filtereinsatz 22 ist ein extrudierter Formkörper oder ein Spritzgusskörper. Die Mantelfläche des Filtereinsatzes 22 ist glatt und bildet den Filterrahmen 23 des Filtereinsatzes 22, d.h. Filterrahmen 23 und Filterelement 24 sind einstückig ausgebildet, ebenso kann es aber auch sein, dass die offenen Enden der Abströmseite mit Hilfe von mind. einem geeigneten Element verschlossen sind oder die einzelnen Kanäle der Wabenstruktur wechselseitig offen und verschlossen sind. Die Mantelfläche bildet den Anordnungsplatz 31 für den Transponder 3. Der Transponder wird einem Etikett ähnlich auf den Filtereinsatz 22 aufgeklebt.

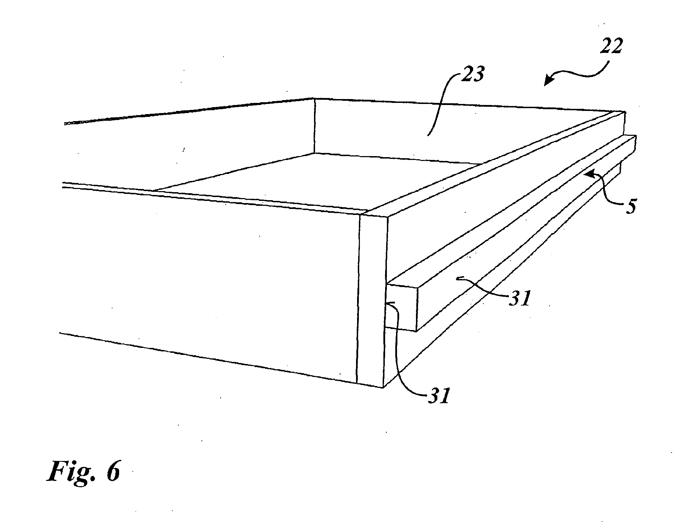

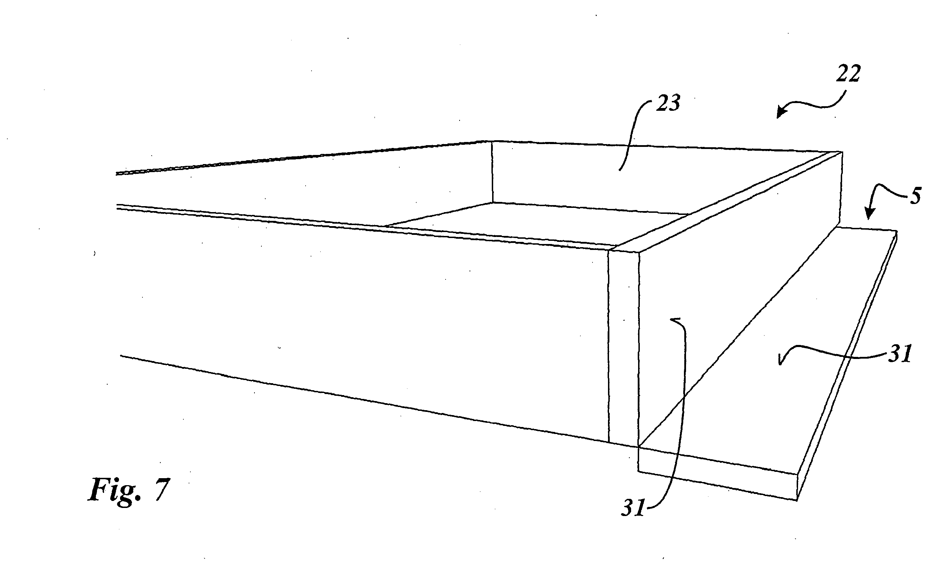

Bei den in den Figuren 6 und 7 dargestellten Filtereinsätzen 22 wird der Filterrahmen 23 ohne im Filterrahmen 23 eingesetzten Filterelement 22 gezeigt.

Diese Figuren 6 und 7 zeigen ein rahmenseitig am Filtereinsatz 22 angeordnetes Bauteil 5, das den Transponder 3 tragen kann. Mögliche Anordnungsplätze 31 der Transponder 3 sind in den Figuren 6 und 7 bezeichnet.

Die Figur 6 zeigt an einem Element des Filterrahmens 23 ein leistenförmiges Bauteil 5. Das Bauteil 5 ist als separate Dichtleiste ausgebildet, um den Filtereinsatz 22 gegenüber dem nichtgezeigten Filtergehäuse im eingebauten Zustand abzudichten. Das Bauteil 5 ist vorzugsweise aus dem selben Material wie der Filtereinsatz 22 bzw. der Filterrahmen 23 gebildet. Hierbei kann die Dichtleiste 5, vorzugsweise auf der dem Filterrahmen 23 abgewandten Seite, einen Transponder 3 aufweisen. Der Transponder 3 kann aber auch zwischen der Dichtleiste 5 und dem Filterrahmen 23 angeordnet sein und dabei vorzugsweise in einem verbindenden Hotmelt-Kleber zwischen Filterrahmen 23 und Dichtleiste 5 angeordnet sein. Es kann aber auch vorgesehen sein, dass der Transponder 3 innerhalb der Dichtleiste 5 anordnet ist, hierbei ist die Dichtleiste 5 vorzugsweise aus Schaumstoff oder Vliesstoff gebildet.

Im Gegensatz zu der Figur 6 zeigt die Figur 7 an einem Element des Filterrahmens 23 ein Bauteil 5, welches vorzugsweise einstückig mit dem Filtereinsatz 22 bzw. dem Filterrahmen 23 verbunden ist. Das Bauteil 5 ist als Dichtlasche ausgebildet. Der Transponder 3 ist auf der rahmenseitigen Stirnseite der Dichtlasche 5 oder auf der den Filterrahmen 23 abgewandten Stirnseite der Dichtlasche 5 angeordnet. Diese Anordnung ist besonders vorteilhaft, denn wenn der Filtereinsatz 22 in dem Filtergehäuse 21 eingesetzt ist, dann liegen die beiden Stirnseiten der Dichtlasche 5 nahezu aufeinander, sodass der Transponder 3 geschützt zwischen diesen beiden Stirnseiten angeordnet ist.

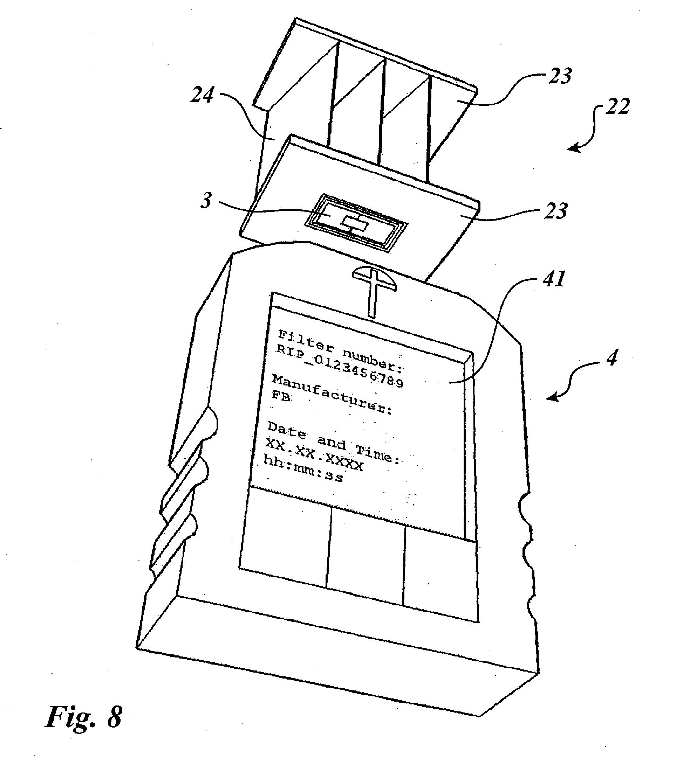

Figur 8 zeigt einen Filtereinsatz 22 mit Transponder 3 und ein Lesegerät 4. Der Filtereinsatz 22 weist einen Filterrahmen 23 mit Transponder 3 und ein Filterelement 24 auf. Das Filterelement 24 ist plattenförmig und plissiert. Die Faltenöffnungen des Filterelements 24 sind mit zwei streifenförmigen Rahmenelementen verschlossen. Diese streifenförmig parallel angeordneten Rahmenelemente bilden den Filterrahmen 23. Filterrahmen 23 und Filterelement 24 sind miteinander verklebt. Vorzugsweise sind Filterrahmen 23 und Filterelement aus dem selben Material gefertigt, bevorzugte Materialien sind hierbei Papier, Kunststoff oder Vliesstoff. Auf der Außenseite eines der Rahmenelemente des Filterrahmens 23 ist ein flacher Transponder 3 mit rechteckiger Grundfläche angeordnet. Der Transponder 3 weist in seiner Mitte einen Chip mit Speicher auf. Dem Chip des Transponders 3 ist eine umlaufende Antenne zugeordnet. Diese Antenne ermöglicht das Auslesen des Chips des Transponders 3, wobei der Transponder 3 vorzugsweise ein passiver RFID-Transponder ist, mittels eines Handlesegeräts 4 mit Display 41.

Das in Figur 8 portabel ausgebildete Lesegerät 4 weist integriert eine Antenne zum Auslesen des Speichers des Transponders 3 auf. Das Lesegerät 4 kann auch Daten auf den Transponder 3 übertragen, falls der Speicher des Transponders 3 wiederbeschreibbar ist. Bei einem wiederbeschreibbaren Speicher handelt es sich um ein EEPROM (EEPROM = electric erasable programmable read-only memory) oder ein FRAM (FRAM = ferromagnetic random access memory) oder ein RAM ( RAM = random access memory). Die Daten des Transponders 3 können umfassen: eine laufende Nummer der Filtereinheit 2, einen Typ der Filtereinheit 2, einen Hersteller der Filtereinheit 2, eine Länderkennung, mehrere Leistungsdaten und/oder technische Daten der Filtereinheit 2, eine Einbauorientierung des Filtereinsatzes 22 für den Einbau in das Filtergehäuse 21, ein Produktionsdatum der Filtereinheit 2, ein Produktionsdatum des Filtereinsatzes 22, ein Einbaudatum der Filtereinheit 2, ein Einbaudatum des Filtereinsatzes 22, ein Serviceintervall des Filtereinsatzes 22 etc. Diese Daten werden auf dem Display, vorzugsweise einem TFT/LCD-Display, dargestellt und diese Daten können bei Bedarf mittels des Lesegerätes 4 verändert und/oder ergänzt werden (TFT = Thin Film Transistor, LCD = Liquid Crystal Display).

Bei bevorzugten Ausführungen handelt es sich um Filtereinrichtungen, vorzugsweise zum Einsatz in einem Kraftfahrzeug als Luftfiltereinrichtung in einer Klimaanordnung oder als Motorfiltereinrichtung, mit einer Filtereinheit (2) mit einem Filtergehäuse (21) und einem einen Filterrahmen (23) und ein Filterelement (24) aufweisenden Filtereinsatz (22) wobei vorgesehen ist, dass ein Transponder (3) im Bereich der Filtereinheit (2) angeordnet ist, und dass ein Lesegerät (4) zum Auslesen des Transponders (3) in der Filtereinheit (2) oder außerhalb der Filtereinheit (2) angeordnet ist.

In bevorzugter Weiterbildung kann vorgesehen sein, dass der Transponder (3) einen Speicher mit Daten aufweist.

In bevorzugter Weiterbildung kann zusätzlich oder alternativ vorgesehen sein, dass die Daten des Speichers verschlüsselt sind.

In bevorzugter Weiterbildung kann zusätzlich oder alternativ vorgesehen sein, dass der Transponder (3) einen wiederbeschreibbaren Speicher aufweist.

In bevorzugter Weiterbildung kann zusätzlich oder alternativ vorgesehen sein, dass der wiederbeschreibbare Speicher des Transponders (3) als EEPROM (EEPROM = electric erasable programmable read-only memory) oder als FRAM (FRAM = ferromagnetic random access memory) oder als RAM (RAM = random access memory) ausgebildet ist.

In bevorzugter Weiterbildung kann zusätzlich oder alternativ vorgesehen sein, dass der Transponder (3) als RFID - Transponder (RFID = radio frequency identification) ausgebildet ist.

In bevorzugter Weiterbildung kann zusätzlich oder alternativ vorgesehen sein, dass der Transponder (3) als aktiver Transponder oder als semi-passiver Transponder oder als passiver Transponder ausgebildet ist.

In bevorzugter Weiterbildung kann zusätzlich oder alternativ vorgesehen sein, dass der Transponder (3) und das Lesegerät (4) eine Betriebsfrequenz im Bereich der Niederfrequenz (LF = low frequency) von 30 kHz bis 300 kHz oder der Hochfrequenz (RF = radio frequency) von 3 MHz bis 30 MHz oder der Ultrahochfrequenz (UHF = ultra high frequency) von 300 MHz bis 3 GHz oder der Mikrowellenfrequenz mit mehr als 3 GHz aufweist.

In bevorzugter Weiterbildung kann zusätzlich oder alternativ vorgesehen sein, dass die folgenden RFID Frequenzen verwendet werden: 9-135 kHz; 6,78 MHz; 13,56 MHz; 27,125 MHz; 433,92 MHz; 865-868 MHz; 915 MHz; 2,45 GHz; 5,8 GHz; 24,125 GHz.

In bevorzugter Weiterbildung kann zusätzlich oder alternativ vorgesehen sein, dass der Transponder (3) und/oder das Lesegerät (4) eine Reichweite von 1 mm bis 15 m aufweist, 0 bis 1 cm: close coupling Systeme; 0 bis 1 m: remote coupling Systeme; > 1 m: long range Systeme.

In bevorzugter Weiterbildung kann zusätzlich oder alternativ vorgesehen sein, dass der Speicher des Transponders (3) eine Speicherkapazität, vorzugsweise von 1 Bit bis 1 Megabyte, aufweist.

In bevorzugter Weiterbildung kann zusätzlich oder alternativ vorgesehen sein, dass der Transponder (3) auf dem Filterelement (24) und/oder auf dem Filterrahmen (23) angeordnet ist.

In bevorzugter Weiterbildung kann zusätzlich oder alternativ vorgesehen sein, dass der Transponder (3) in dem Filterelement (24), insbesondere in dem Material des Filterelements (24), und/oder in dem Filterrahmen (23), insbesondere in dem Material des Filterrahmens (23), angeordnet ist.

In bevorzugter Weiterbildung kann zusätzlich oder alternativ vorgesehen sein, dass der Transponder (3) zwischen dem Filterelement (24) und dem Filterrahmen (23) angeordnet ist. vorzugsweise eingebettet in den Kleber.

In bevorzugter Weiterbildung kann zusätzlich oder alternativ vorgesehen sein, dass das Lesegerät (4) innerhalb eines Kraftfahrzeugs, vorzugsweise im Bereich der Filtereinheit (2), angeordnet ist.

In bevorzugter Weiterbildung kann zusätzlich oder alternativ vorgesehen sein, dass das Lesegerät (4) außerhalb des Filtergehäuses (21) angeordnet ist.

In bevorzugter Weiterbildung kann zusätzlich oder alternativ vorgesehen sein, dass das Lesegerät (4) mit dem Filtergehäuse (21) verbunden oder lösbar ausgebildet ist.

In bevorzugter Weiterbildung kann zusätzlich oder alternativ vorgesehen sein, dass das Lesegerät (4) in dem Filtergehäuse (21) verbunden und/oder lösbar von dem Filtergehäuse (21) ausgebildet ist.

In bevorzugter Weiterbildung kann zusätzlich oder alternativ vorgesehen sein, dass das Lesegerät (4) mit einem Display (41) verbindbar oder mit einem Display (41) als gemeinsames Bauteil ausgebildet ist.

In bevorzugter Weiterbildung kann zusätzlich oder alternativ vorgesehen sein, dass ein Auslesen des Transponders (3) nur dann möglich wird, wenn der Filtereinsatz (22) mit verbundenem Transponder (3) entsprechend zu dem Lesegerät (4) zum Auslesen des Transponders (3) angeordnet ist.

In bevorzugter Weiterbildung kann zusätzlich oder alternativ vorgesehen sein, dass ein Auslesen des Transponders (3) nicht möglich wird, wenn der Filtereinsatz (22) mit verbundenem Transponder (3) nicht entsprechend zu dem Lesegerät (4) zum Auslesen des Transponders (3) angeordnet ist.

In bevorzugter Weiterbildung kann zusätzlich oder alternativ vorgesehen sein, dass das Lesegerät (4) stationär oder tragbar ausgebildet ist.

In bevorzugter Weiterbildung kann zusätzlich oder alternativ vorgesehen sein, dass das Lesegerät (4) als Handlesegerät ausgebildet ist.

In bevorzugter Weiterbildung kann zusätzlich oder alternativ vorgesehen sein, dass die Filtereinrichtung mehrere Filtereinheiten oder Filtereinsätze (22) aufweist.

In bevorzugter Weiterbildung kann zusätzlich oder alternativ vorgesehen sein, dass die Filtereinrichtung mehrere Transponder (3) aufweist.

In bevorzugter Weiterbildung kann zusätzlich oder alternativ vorgesehen sein, dass die Filtereinrichtung mehrere Lesegeräte (4) aufweist.

In bevorzugter Weiterbildung kann zusätzlich oder alternativ vorgesehen sein, dass das Lesegerät (4) zum Auslesen mehrerer Transponder (3) ausgebildet ist.

In bevorzugter Weiterbildung kann zusätzlich oder alternativ vorgesehen sein, dass die Filtereinheit (2) ein mit dem Filtergehäuse (21) und/oder dem Filtereinsatz (22) verbundenes oder von diesem lösbares den Transponder (3) tragendes Bauteil (5) aufweist, wobei das Bauteil (5) eine Dichtung und/oder eine Dichtlasche und/oder eine Auszugslasche und/oder ein, vorzugsweise streifenförmiges, Versteifungselement und/oder einen Deckel für das Filtergehäuse (21) oder ein speziell für die Anbringung des Transponders gedachtes Bauteil bildet.

In bevorzugter Weiterbildung kann zusätzlich oder alternativ vorgesehen sein, dass der Transponder (3) auf dem Bauteil (5) oder in dem Bauteil (5), insbesondere in dem Material des Bauteils (5) angeordnet ist, und/oder dass der Transponder (3) zwischen dem Filterrahmen (23) und dem Bauteil (5) angeordnet ist.

In bevorzugter Weiterbildung kann zusätzlich oder alternativ vorgesehen sein, dass der Transponder (3) und das Lesegerät (4) auf unterschiedlichen Bauteilen angeordnet sind, z. B. der Transponder (3) auf dem Filtereinsatz (22) und das Lesegerät (4) auf dem Filtergehäuse (21) oder einem anderen Bauteil des Kraftfahrzeuges angeordnet oder als tragbares Lesegerät ausgebildet ist.

In bevorzugter Weiterbildung kann zusätzlich oder alternativ vorgesehen sein, dass die Filtereinheit (2) in einem Kraftfahrzeug angeordnet ist.

In bevorzugter Weiterbildung kann zusätzlich oder alternativ vorgesehen sein, dass die Filtereinheit (2) als Filtereinheit (2) einer Klimaeinrichtung oder als Kabinenluftfiltereinrichtung oder als Kraftstofffiltereinrichtung oder als Filtereinrichtung für eine Brennstoffzelle oder als Motorfiltereinrichtung oder als Feinstaubfiltereinrichtung, vorzugsweise einer Dieselrußfiltereinrichtung, oder als Filtereinheit (2) einer Tankbelüftung oder als Ölfiltereinrichtung ausgebildet ist.

In bevorzugter Weiterbildung kann zusätzlich oder alternativ vorgesehen sein, dass der Filtereinsatz (22) als Ringfilter / Trommelfilter und/oder als extrudierter Formkörperfilter, vorzugsweise mit wabenförmiger Struktur, und/oder als Faltenfilter und/oder als Plattenfilter und/oder als Filtermatte ausgebildet ist.

In bevorzugter Weiterbildung kann zusätzlich oder alternativ vorgesehen sein, dass das Filterelement (24) als Partikelfilter oder als Kombifilter oder als Geruchsfilter, vorzugsweise Aktivkohlefilter, ausgebildet ist.

In bevorzugter Weiterbildung kann zusätzlich oder alternativ vorgesehen sein, dass der Filterrahmen (23) aus Papier und/oder Textilien und/oder Kunststoff und/oder Vliesstoff und/oder Metall besteht.

In bevorzugter Weiterbildung kann zusätzlich oder alternativ vorgesehen sein, dass das Filterelement (24) aus Papier und/oder Textilien und/oder Kunststoff und/oder Vliesstoff besteht.

Ferner besteht eine erfindungsgemäße Lösung in der Verwendung einer Funkerkennung zur Datenerfassung eines Filtereinsatzes (22) einer Filtereinheit (2) zum Einsatz in einem Kraftfahrzeug, indem vorgesehen wird, dass die Filtereinheit (2) ein Filtergehäuse (21) und einen einen Filterrahmen (23) und ein Filterelement (24) aufweisenden Filtereinsatz (22) aufweist, und dass die Funkerkennung über einen Transponder (3) und ein zum Auslesen des Transponders (3) ausgebildetes Lesegerät (4) erfolgt, wobei der Transponder (3) im Bereich der Filtereinheit (2) angeordnet und das Lesegerät (4) in der Filtereinheit (2) oder außerhalb der Filtereinheit (2) angeordnet wird.

Eine weitere erfindungsgemäße Lösung besteht in der Verwendung einer Funkerkennung zur Überprüfung und/oder zur Datenerfassung des Betriebszustandes und/oder Einbauzustandes einer in einem Kraftfahrzeug eingebauten Filtereinheit (2) indem vorgesehen ist, dass die im Kraftfahrzeug eingebaute Filtereinheit (2) ein im Kraftfahrzeug eingebautes Filtergehäuse (21) und einen in dem Filtergehäuse (21) auswechselbar eingesetzten Filtereinsatz (22) mit einem Filterrahmen (23) und einem Filterelement (24) aufweist, dass die Funkerkennung über einen Transponder (3) und ein zum Auslesen des Transponders (3) ausgebildetes Lesegerät (4) erfolgt, indem der Transponder (3) in der Filtereinheit (2) im Bereich des in dem Filtergehäuse (21) eingesetzten Filtereinsatzes (22) angeordnet und das Lesegerät (4) in der Filtereinheit (2) oder außerhalb der Filtereinheit (2) angeordnet wird.

Eine bevorzugte Weiterbildung besteht in einer Verwendung einer Funkerkennung nach Satz 37 oder 38, dadurch gekennzeichnet, dass der Transponder (3) einen Speicher mit Daten aufweist und vorzugsweise die Daten des Speichers verschlüsselt sind.

Eine bevorzugte Weiterbildung von mindestens einer der oben genannten Verwendungen ist eine Verwendung einer Funkerkennung, bei der vorgesehen ist, dass der Transponder (3) einen wiederbeschreibbaren Speicher aufweist.

Eine bevorzugte Weiterbildung von mindestens einer der oben genannte Verwendungen ist eine Verwendung einer Funkerkennung, bei der vorgesehen ist, dass der Transponder (3) als RFID - Transponder (RFID = radio frequency identification) ausgebildet ist.

Eine bevorzugte Weiterbildung von mindestens einer der oben genannten Verwendungen ist eine Verwendung einer Funkerkennung, bei der vorgesehen ist, dass der Transponder (3) als aktiver Transponder oder als semi-passiver Transponder oder als passiver Transponder ausgebildet ist.

Eine bevorzugte Weiterbildung von mindestens einer der oben genannten Verwendungen ist eine Verwendung einer Funkerkennung, bei der vorgesehen ist, dass das Lesegerät (4) mit einem Display (41) verbindbar oder mit einem Display (41) als gemeinsames Bauteil ausgebildet ist.

Eine bevorzugte Weiterbildung von mindestens einer der oben genannten Verwendungen ist eine Verwendung einer Funkerkennung, bei der vorgesehen ist, dass der Transponder (3) und/oder das Lesegerät (4) eine Reichweite von 1 mm bis 15 m aufweist.

### Bezugszeichenliste:

- 2: Filtereinheit
- 21: Filtergehäuse
- 22: Filtereinsatz
- 23: Filterrahmen
- 24: Filterelement
- 3: Transponder
- 31: Anordnungsplatz für Transponder
- 4: Lesegerät
- 41: Display
- 5: Transponder tragendes Bauteil

## Patentansprüche

1. Filtereinrichtung, vorzugsweise zum Einsatz in einem Kraftfahrzeug als Luftfiltereinrichtung in einer Klimaanordnung oder als Motorfiltereinrichtung, mit einer Filtereinheit (2) mit einem Filtergehäuse (21) und einem einen Filterrahmen (23) und ein Filterelement (24) aufweisenden Filtereinsatz (22), wobei vorgesehen ist,
dass ein Transponder (3) im Bereich der Filtereinheit (2) angeordnet ist, und dass ein Lesegerät (4) zum Auslesen des Transponders (3) in der Filtereinheit (2) oder außerhalb der Filtereinheit (2) angeordnet ist und
dass der Transponder (3) einen Speicher mit Daten aufweist,
**dadurch gekennzeichnet,**
**dass** die Daten des Speichers kryptographisch verschlüsselt sind.

2. Filtereinrichtung nach Anspruch 1,
**dadurch gekennzeichnet,**
**dass** der Transponder (3) einen wiederbeschreibbaren Speicher aufweist.

3. Filtereinrichtung nach einem der vorangehenden Ansprüche,
**dadurch gekennzeichnet,**
**dass** der Transponder (3) als RFID - Transponder (RFID = radio frequency identification) ausgebildet ist.

4. Filtereinrichtung nach einem der vorangehenden Ansprüche,
**dadurch gekennzeichnet,**
**dass** der Transponder (3) in oder auf dem Filterelement (24), insbesondere in dem Material des Filterelements (24), und/oder in oder auf dem Filterrahmen (23), insbesondere in dem Material des Filterrahmens (23), angeordnet ist.

5. Filtereinrichtung nach einem der vorangehenden Ansprüche,
**dadurch gekennzeichnet,**
**dass** der Transponder (3) zwischen dem Filterelement (24) und dem Filterrahmen (23) angeordnet ist, vorzugsweise eingebettet in den Kleber.

6. Filtereinrichtung nach einem der vorangehenden Ansprüche,
**dadurch gekennzeichnet,**
**dass** das Lesegerät (4) mit einem Display (41) verbindbar oder mit einem Display (41) als gemeinsames Bauteil ausgebildet ist.

7. Filtereinrichtung nach einem der vorangehenden Ansprüche,
**dadurch gekennzeichnet,**
**dass** die Filtereinheit (2) ein mit dem Filtergehäuse (21) und/oder dem Filtereinsatz (22) verbundenes oder von diesem lösbares den Transponder (3) tragendes Bauteil (5) aufweist, wobei das Bauteil (5) eine Dichtung und/oder eine Dichtlasche und/oder eine Auszugslasche und/oder ein, vorzugsweise streifenförmiges, Versteifungselement und/oder einen Deckel für das Filtergehäuse (21) oder ein speziell für die Anbringung des Transponders gedachtes Bauteil bildet, und
**dass** vorzugsweise der Transponder (3) auf dem Bauteil (5) oder in dem Bauteil (5), insbesondere in dem Material des Bauteils (5) angeordnet ist, und/oder der Transponder (3) zwischen dem Filterrahmen (23) und dem Bauteil (5) angeordnet ist.

8. Filtereinrichtung nach einem der vorangehenden Ansprüche,
**dadurch gekennzeichnet,**
**dass** die Filtereinheit (2) in einem Kraftfahrzeug angeordnet ist, und
wobei die Filtereinheit (2) als Filtereinheit (2) einer Klimaeinrichtung oder als Kabinenluftfiltereinrichtung oder als Kraftstofffiltereinrichtung oder als Filtereinrichtung für eine Brennstoffzelle oder als Motorfiltereinrichtung oder als Feinstaubfiltereinrichtung, vorzugsweise einer Dieselrußfiltereinrichtung, oder als Filtereinheit (2) einer Tankbelüftung oder
als Ölfiltereinrichtung ausgebildet ist.

9. Filtereinrichtung nach einem der vorangehenden Ansprüche,
**dadurch gekennzeichnet,**
**dass** das Filterelement (24) als Partikelfilter, oder als Kombifilter oder als Geruchsfilter, vorzugsweise als Aktivkohlefilter ausgebildet ist, und
**dass** der Filtereinsatz (22) als Ringfilter / Trommelfilter und/oder als extrudierter Formkörperfilter, vorzugsweise mit wabenförmiger Struktur, und/oder als Faltenfilter und/oder als Plattenfilter und/oder als Filtermatte ausgebildet ist.

10. Filtereinrichtung nach einem der vorangehenden Ansprüche,
**dadurch gekennzeichnet,**
**dass** der Transponder (3) als aktiver Transponder oder als semi-passiver Transponder oder als passiver Transponder ausgebildet ist.

11. Filtereinrichtung nach einem der vorangehenden Ansprüche,
**dadurch gekennzeichnet,**
**dass** die Filtereinrichtung mehrere Transponder (3) aufweist und/oder
**dass** das Lesegerät (4) zum Auslesen mehrerer Transponder (3) ausgebildet ist.

12. Filtereinrichtung nach einem der vorangehenden Ansprüche,
**dadurch gekennzeichnet,**
**dass** der Transponder (3) und/oder das Lesegerät (4) eine Reichweite von 1 mm bis 15 m aufweist, 0 bis 1 cm: close coupling Systeme; 0 bis 1 m: remote coupling Systeme; > 1 m: long range Systeme.

13. Filtereinrichtung nach einem der vorangehenden Ansprüche,
**dadurch gekennzeichnet,**
**dass** die kryptographisch verschlüsselten Daten des Speichers mit einem Passwortsystem und/oder einem Hash-Lock-Verfahren und/oder einem Challenge-Response-Verfahren vor unbefugtem Zugriff geschützt sind.

14. Verwendung einer Funkerkennung zur Überprüfung und/oder zur Datenerfassung des Betriebszustandes und/oder Einbauzustandes einer in einem Kraftfahrzeug eingebauten Filtereinheit (2), indem vorgesehen ist, dass die im Kraftfahrzeug eingebaute Filtereinheit (2) ein im Kraftfahrzeug eingebautes Filtergehäuse (21) und einen in dem Filtergehäuse (21) auswechselbar eingesetzten Filtereinsatz (22) mit einem Filterrahmen (23) und einem Filterelement (24) aufweist,
dass die Funkerkennung über einen Transponder (3) und ein zum Auslesen des Transponders (3) ausgebildetes Lesegerät (4) erfolgt, indem der Transponder (3) in der Filtereinheit (2) im Bereich des in dem Filtergehäuse (21) eingesetzten Filtereinsatzes (22) angeordnet und das Lesegerät (4) in der Filtereinheit (2) oder außerhalb der Filtereinheit (2) angeordnet wird, wobei der Transponder (3) einen Speicher mit kryptographisch verschlüsselten Daten aufweist.

15. Verwendung einer Funkerkennung zur Überprüfung und/oder zur Datenerfassung des Betriebszustandes und/oder Einbauzustandes einer in einem Kraftfahrzeug eingebauten Filtereinheit (2) indem vorgesehen ist, dass die im Kraftfahrzeug eingebaute Filtereinheit (2) ein im Kraftfahrzeug eingebautes Filtergehäuse (21) und einen in dem Filtergehäuse (21) auswechselbar eingesetzten Filtereinsatz (22) mit einem Filterrahmen (23) und einem Filterelement (24) aufweist, dass die Funkerkennung über einen Transponder (3) und ein zum Auslesen des Transponders (3) ausgebildetes Lesegerät (4) erfolgt, indem der Transponder (3) in der Filtereinheit (2) im Bereich des in dem Filtergehäuse (21) eingesetzten Filtereinsatzes (22) angeordnet und das Lesegerät (4) in der Filtereinheit (2) oder außerhalb der Filtereinheit (2) angeordnet wird, wobei der Transponder (3) einen Speicher mit kryptographisch verschlüsselten Daten aufweist.
